# EUROPEAN PATENT APPLICATION

(11) **EP 1 422 624 A1**
(43) Date of publication of application: **26.05.2004**
(21) Application number: 02760734.0
(22) Date of filing: 26.08.2002
(51) Int. Cl.: G06F 13/00, H04N 7/173

(54) **INFORMATION PROVIDING SYSTEM, INFORMATION PROCESSING APPARATUS AND METHOD, AND INFORMATION PROVIDING APPARATUS AND METHOD**

(30) Priority: 27.08.2001 JP 2001255582
(71) Applicant: Sony Corporation, Tokyo 141-0001 (JP)
(72) Inventor: TSUTSUI, Shintaro, SONY CORPORATION, Tokyo 141-0001 (JP); ISOBE, Takatoshi, SONY CORPORATION, Tokyo 141-0001 (JP)
(74) Representative: DeVile, Jonathan Mark, Dr.
(86) International application number: PCT/JP2002/008546
(87) International publication number: WO 2003/019387

(57) **Abstract**

The present invention relates to an information providing system, information processing apparatus and method, and information providing apparatus and method, which prevents network contents from being used unduly. The broadcast contents, sent on the air toward a digital broadcast receiver 4 by the broadcast station 1-1, 1-2, has a reference to network contents to be provided by a contents server 9. The digital broadcast receiver 4 requests the contents server 9 to deliver network contents through the Internet 8. At this time, a URI of the broadcast contents is sent to the contents server 9. The contents server 9 searches through a database on the basis of the broadcast contents URI. In the case that the broadcast contents is not restricted in making reference to the network contents, the network contents are distributed to the digital broadcast receiver 4 through the Internet 8. The invention is applicable to a digital broadcast system.

## Description

### TECHNICAL FIELD

The present invention relates to an information providing system, information processing apparatus and method, and information providing apparatus and method, and more particularly to an information providing system, information processing apparatus and method, and information providing apparatus and method adapted for preventing information from being utilized unduly.

### BACKGROUND ART

Recently, with the spread of the Internet, there is a trend toward distributing various kinds of contents through the Internet.

On the other hand, digital television broadcast is toward spreading. For example, by the broadcast contents sent on the air by digital television broadcast, reference is made possible to network contents distributed through the Internet. In this case, the digital television receiver receives broadcast contents. In the case that the broadcast contents is making reference to network contents, access is made to a predetermined contents server through the Internet, to receive a provision of network contents.

However, in case the broadcast contents are made allowed for a reference to network contents, there is a fear that the network contents be unduly utilized without the grant by the copyrighter.

### DISCLOSURE OF THE INVENTION

The present invention, made in view of such a situation, is to easily and positively prevent network contents from being utilized unduly.

An information providing system of the present invention is characterized by: an first information providing apparatus providing first information for making reference to second information to an information processing apparatus; the information processing apparatus receiving the first information from the first information providing apparatus, extracting identifying information for identifying the first information from the received first information, and requesting to provide the second information being made reference to by the received first information by attaching the identifying information to a second information providing apparatus; the second information providing apparatus determining whether or not to provide the second information to the information processing apparatus on the basis of the identifying information received from the information processing apparatus, and providing the second information to the information processing apparatus on the basis of a determination result thereof.

The first information providing apparatus can provide broadcast contents as the first information by broadcast, while the second information providing apparatus can provides apparatus providing network contents as the second information through the Internet.

The identifying information can be a URI of the broadcast contents.

The information processing apparatus can insert the URI of the broadcast contents into an http message header, and requesting to provide the second information the second information providing apparatus.

A first information providing method of the invention is characterized by: a first information providing apparatus providing first information for making reference to second information to an information processing apparatus; the information processing apparatus receiving the first information from the first information providing apparatus, extracting identifying information for identifying the first information from the received first information, and requesting to provide the second information being made reference to by the received first information by attaching the identifying information to a second information providing apparatus; the second information providing apparatus determining whether or not to provide the second information to the information processing apparatus on the basis of the identifying information received from the information processing apparatus, and providing the second information to the information processing apparatus on the basis of a determination result thereof.

An information processing apparatus of the invention is characterized by comprising: first receivingmeans for receiving first information provided by a first information providing apparatus; extracting means for extracting identifying information for identifying the first information from the first information received by the first receiving means; request means for requesting to provide second informationbeingmade reference toby the first information received by the first receiving means, by attaching the identifying information extracted by the extracting means to a second information providing apparatus; and second receiving means for receiving the second information provided by the second information providing apparatus, on the basis of a request by the request means.

The first receiving means can receive broadcast contents provided by a broadcast of the first information providing apparatus as the first information, while the second receiving means can receive network contents provided by the second information providing apparatus through the Internet as the second information.

The extracting means can extract a URI of the broadcast contents as the identifying information.

The request means can insert the URI of the broadcast contents into an http message header, to request for providing the second information.

There can be further comprised of display means for displaying the second information received by the second receiving means simultaneously with the first information received by the first receiving means.

There can be further comprised of display means for displaying the broadcast contents receivedbythe first receiving means and the network contents being made reference to by the broadcast contents, and received by the second receiving means, simultaneously on a same screen.

A second information processing method of the invention is characterized by comprising: a first receiving step of receiving first information provided by a first information providing apparatus; an extracting step of extracting identifying information for identifying the first information from the first information received by a process of the first receiving step; a request step of requesting asecond information providing apparatus to provide second information being made reference to by the first information received in the first receiving step, by attaching the identifying information extracted by a process of the extracting step; and a second receiving step of receiving the second information provided by the second information providing apparatus, on the basis of a request by a process of the request step.

A first recording medium program of the invention is a program for an information processing apparatus for receiving first information provided by a first information providing apparatus and second informationprovidedby a second information providing apparatus to be made reference to by the first information, a recording medium recording a program to be read by a computer characterized by comprising: a first receiving step of receiving the first information provided by the first information providing apparatus; an extracting step of extracting identifying information for identifying the first information from the first information received by a process of the first receiving step; a request step of requesting the second information providing apparatus to provide the second information being made reference to by the first information received in the first receiving step, by attaching the identifying information extracted by a process of the extracting step; and a second receiving step of receiving the second information provided by the second information providing apparatus, on the basis of a request by a process of the request step.

A first program of the invention is for making a computer for controlling an information processing apparatus for receiving first information provided by a first information providing apparatus and second information provided by a second information providing apparatus to be made reference to by the first information, to execute: a first receiving step of receiving the first information provided by the first information providing apparatus; an extracting step of extracting identifying information for identifying the first information from the first information received by a process of the first receiving step; a request step of requesting the second information providing apparatus to provide the second information being made reference to by the first information received in the first receiving step, by attaching the identifying information extracted by a process of the extracting step; and a second receiving step of receiving the second information provided by the second information providing apparatus, on the basis of a request by a process of the request step.

An information providing apparatus of the invention is characterized by comprising: receiving means for receiving a request for providing second information from an information processing apparatus; extracting means for extracting identifying information for identifying first information from a request received by the receiving means; determining means for determining whether to provide the second information to the information processing apparatus or not, on the basis of the identifying information extracted by the extracting means; and providing means for providing the second information to the information processing apparatus, on the basis of a determination result by the determining means.

The providing means can provide network contents as the second information to be made reference to by broadcast contents as the first information provided by broadcast of the other information providing apparatus, through the Internet.

The extracting means can extract a URI of the broadcast contents as the identifying information.

The extracting means can extract a URI of the broadcast contents from an http message header.

There can be further comprised of storingmeans for storing access restricting information for restricting an access of the second information, the determining means determining whether to provide the second information to the information processing apparatus, further on the basis of the access restricting information stored in the storing means.

An information providing method of the invention is characterized by comprising: a receiving step of receiving a request for providing second information from an information processing apparatus; an extracting step of extracting identifying information for identifying first information from a request received by a process of the receiving step; a determining step of determining whether to provide the second information to the information processing apparatus or not, on the basis of the identifying information extracted by a process of the extraction step; and a providing step of providing the second information to the information processing apparatus, on the basis of a determination result by a process of the determining step.

A second recording medium program of the invention is a program for an information providing apparatus for providing second information to be made reference to by first information provided to an information processing apparatus by another information providing apparatus to the information processing apparatus, a recording medium recording a program to be read by a computer characterized by comprising: a receiving step of receiving a request for providing the second information from the information processing apparatus; an extracting step of extracting identifying information for identifying the first information from a request received by a process of the receiving step; a determining step of determining whether to provide the second information to the information processing apparatus or not, on the basis of the identifying information extracted by a process of the extraction step; and a providing step of providing the second information to the information processing apparatus, on the basis of a determination result by a process of the determining step.

A second program of the invention is a program for making a computer for controlling an information providing apparatus for providing second information to be made reference to by first information provided to an information processing apparatus by another information providing apparatus to the information processing apparatus, to execute: a receiving step of receiving a request for providing the second information from the information processing apparatus; an extracting step of extracting identifying information for identifying the first information from a request received by a process of the receiving step; a determining step of determining whether to provide the second information to the information processing apparatus or not, on the basis of the identifying information extracted by a process of the extraction step; and a providing step of providing the second information to the information processing apparatus, on the basis of a determination result by a process of the determining step.

In the information providing system and information providing method of the invention, the information processing apparatus extracts first information received from the first information providing apparatus of identifying information for identifying the first information, and requests the second information providing apparatus to provide second information being made reference to by the first information by attaching the identifying information. The second information providing apparatus determines whether to provide the second information to the information processing apparatus or not on the basis of this identifying information, and provides the second information to the information providing apparatus on the basis of the determination result.

According to the information processing apparatus and method, recording medium, andprogramof the invention, extracted is the particular information contained in the first information received from the first information providing apparatus. By attaching the extracted identifying information, the second information providing apparatus is requested to provide second information. Based on this request, received is the second information provided by the second information providing apparatus.

According to the information providing apparatus and method, recording medium, and program of the invention, when receiving a request for providing second information from the information processing apparatus, the identifying information for identifying first information is extracted. Based on the identifying information, it is determined whether to provide the second information to the information processing apparatus or not. Based on the determination result, the second information is provided to the information processing apparatus.

### BRIEF DESCRIPTION OF THE DRAWINGS

Fig. 1 is a figure showing a configuration of an information providing system to which the present invention is applied.
Fig. 2 is a block diagram showing a configuration of a digital broadcast receiver in Fig. 1.
Fig. 3 is a block diagram showing a configuration of contents server in Fig. 1.
Fig. 4 is a figure showing a database example.
Fig. 5 is a flowchart explaining the processing of the digital broadcast receiver in Fig. 1.
Fig. 6 is a figure showing a URI example.
Fig. 7 is a figure showing a format of an http message header.
Fig. 8A is a figure showing a display example of network contents and broadcast contents.
Fig. 8B is a figure showing a display example of network contents and broadcast contents.
Fig. 9 is a flowchart explaining the processing of the contents server in Fig. 1.
Fig. 10 is a figure showing a format example of an access restricting file.

### BEST MODE FOR CARRYING OUT THE INVENTION

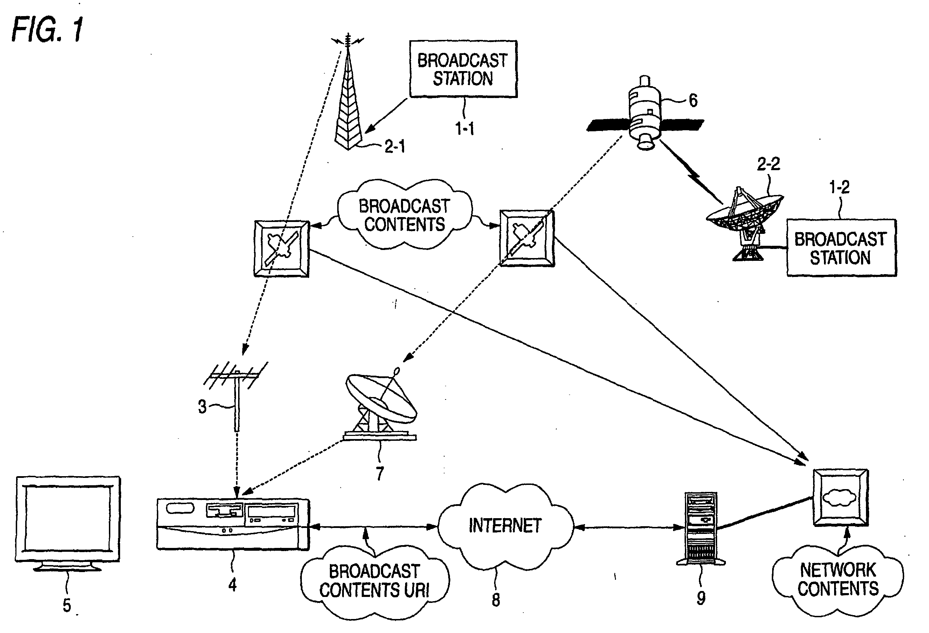

Fig. 1 represents a configuration example of an information providing system to which the present invention is applied. In this configuration example, a broadcast station 1-1 sends broadcast contents on the air to households through a radio tower 2-1. In each household, a digital broadcast receiver 4 receives the broadcast contents through an antenna 3.

Likewise, a broadcast station 1-2 puts broadcast contents on air to households from a parabolic antenna 2-2 through a satellite 6. In each household, the digital broadcast receiver 4 receives the broadcast contents through a parabolic antenna 7. The digital broadcast receiver 4 outputs the broadcast contents received to a monitor 5, and displays it thereon.

The digital broadcast receiver 4 is also connected to the Internet 8. To the Internet 8, also connected is contents server 9 for distributing network contents through the Internet 8. The broadcast contents, put on the air by the broadcast station 1-1 or broadcast station 1-2, is made reference to as required by network contents which the contents server 9 has provided.

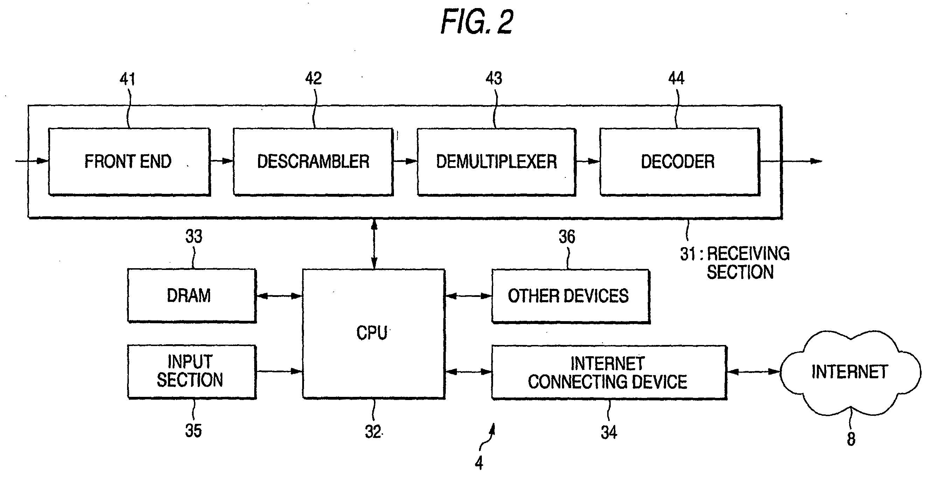

Fig. 2 represents a configuration example of the digital broadcast receiver 4. The front end 41 configuring a receiving section 31 receives a signal corresponding to broadcast contents through the antenna 3 or parabolic antenna 7, and supplies the demodulation signal thereof to a descrambler 42 in the succeeding stage. The descrambler 42 descrambles the scrambled signal supplied from the front end 41 and outputs it to a demultiplexer 43. The demultiplexer 43 separates, from inputted data, the data of a predetermined channel designated by a CPU 32, and outputs it to a decoder 44. The decoder 44 decodes the inputted predetermined channel data by an MPEG 2 scheme or the like, to output and display it onto a monitor 5.

The CPU 32, when an input section 35 configured by a remote controller, various button switches and the like is operated by the user, places various parts under control on the basis of the signal inputted from the input section 35. A DRAM 33 suitably stores the data and programs needed for the CPU 32 to execute various processes. An Internet connecting device 34 is connected to the Internet 8, to execute an interface process at between the CPU 32 and the Internet 8. The CPU 32 is further connected with other devices 36.

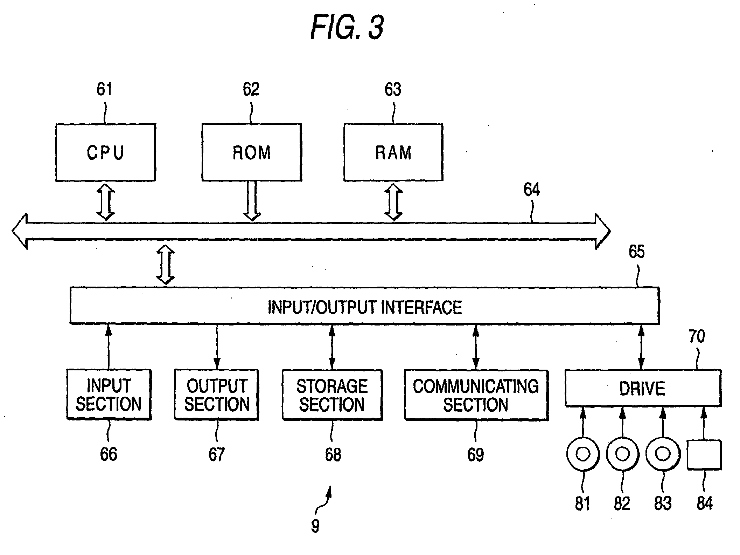

Fig. 3 represents a configuration example of the contents server 9. In Fig. 3, a CPU (Central Processing Unit) 61 executes various processes, according to the program stored in a ROM (Read Only Memory) 62 or the program loaded onto a RAM (Random Access Memory) 63 from a storage section 68. The RAM 63 suitably stores the data needed for the CPU 61 to execute various processes.

The CPU 61, the ROM 62 and the RAM 63 are connected one with another by way of the bus 64. This bus 64 is connected also with an input/output interface 65.

The input/output interface 65 is connected with an input section 66 configured by a keyboard, a mouse or the like, an output section 67 configured by a display made by a CRT (Cathode Ray Tube), an LCD (Liquid Crystal display) or the like and a speaker, a storage section 68 structured by a hard disk, and a communicating section 69 configured by a modem, a terminal adapter or the like. The communicating section 69 carries out a communication process through a network including the Internet 8.

The input/output interface 65 is connected with a drive 70 as required, to be suitably loaded with a magnetic disk 81, an optical disk 82, a magneto optical disk 83, a semiconductor memory 84 or the like. The computer program read out of those is installed to the storage section 68, as required.

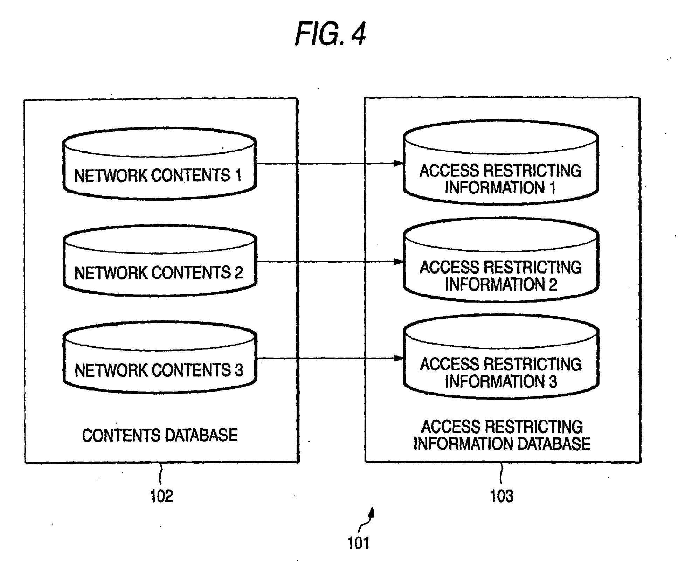

The storage section 68 of the contents server 9 is formed with a database 101 as shown in Fig. 4. This database 101 is configured by a contents database 102 and an access restricting information database 103. The contents database 102 is stored with various network contents. In the Fig. 4 example, there are stored network contents 1 to network contents 3.

The access restricting information database 103 is stored with the access restricting information corresponding to the network contents stored in the contents database 102. In the Fig. 4 example, access restricting information 1 to access restricting information 3 are stored correspondingly to the network contents 1 to network contents 3. The access restricting information 1 is information that restricts the network contents 1 from accessing, the access restricting information 2 is information that restricts the network contents 2 from accessing, and the access restricting information 3 is information that restricts the network contents 3 from accessing.

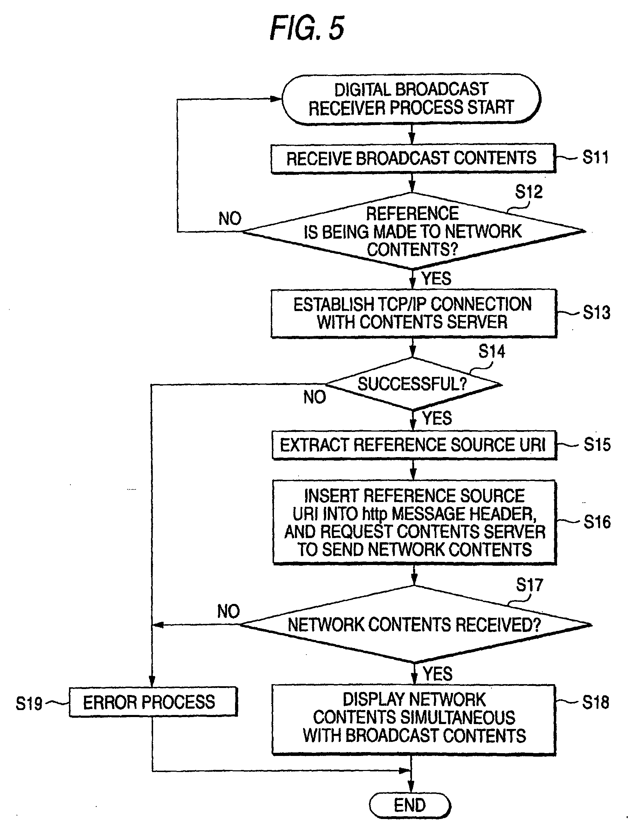

Now, referring to the flowchart of Fig. 5, explanation is made on the process of the digital broadcast receiver 4.

The broadcast station 1-1 sends predetermined broadcast contents on the air through the radio tower 2-1. The broadcast station 1-2 also sends predetermined contents on the air from the parabolic antenna 2-2 through the satellite 6. The digital broadcast receiver 4 receives these broadcast contents through the antenna 3 or parabolic antenna 7.

Namely, the CPU 32 places the various sections under control on the basis of the instruction from the input section 35, and causes the front end 41 to receive a signal corresponding to a radio wave on a designated channel. The descramble 42, when the demodulation signal supplied from the front end 41 is scrambled, descrambles and outputs it to the demultiplexer 43. The demultiplexer 43 selects, from input data, the data on a channel designated by the CPU 32 and outputs it to the decoder 44. The decoder 44 decodes the input data by an MPEG 2 scheme, to output and display it onto the monitor 5.

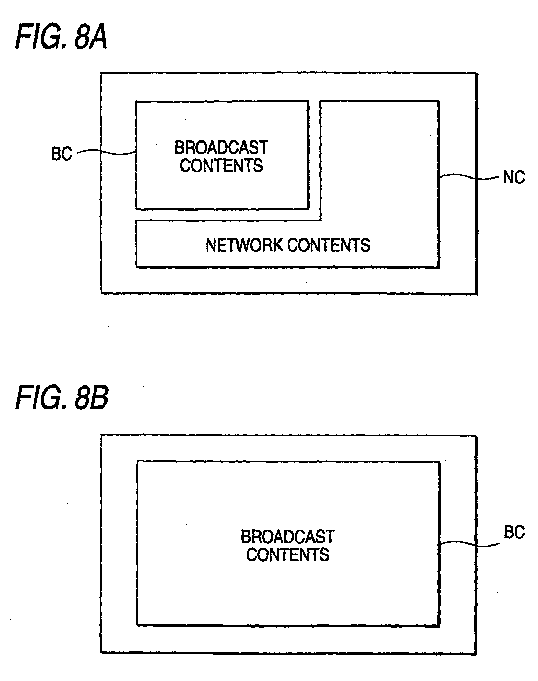

The broadcast contents, sent on the air by the broadcast station 1-1 or broadcast station 1-2, has a reference to network contents to be provided by the contents server 9, as required. This reference information is transferred from the demultiplexer 43 to the CPU 32. The CPU 32 at step S12 determines whether or not the network contents are being made reference to by broadcast contents now being received. In the case of not being made reference to, the process returns to step S11, to execute the subsequent process repeatedly. Namely, in this case, the process of step S13 and the subsequent, hereinafter described, is not executed. On the monitor 5, the broadcast contents BC only is displayed as shown in Fig. 8B hereinafter referred.

At the step S12, in the case of a determination that network contents are made reference to by the broadcast contents now being received, the process proceeds to step S13 where the CPU 32 executes a process to establish a TCP/IP connection with the contents server 9 providing the designated network contents.

At step S14, the CPU 32 determines whether establishing a connection with the contents server 9 has been successful or not. In the case of not successful, the process proceeds to step S19, to carry out an error process.

At step S14, in the case of a determination that establishing a connection has been successful, the process proceeds to step S15. The CPU 32 extracts a reference source URI (Uniform Resource Indicator) as identifying information for identifying the broadcast contents received at the step S11. This URI is an addition to the broadcast contents provided by the broadcast station 1-1, 1-2. This URI uses an absolute pass in an arib-dc:// form shown in Chapter 9 of ARIB STD-B24.

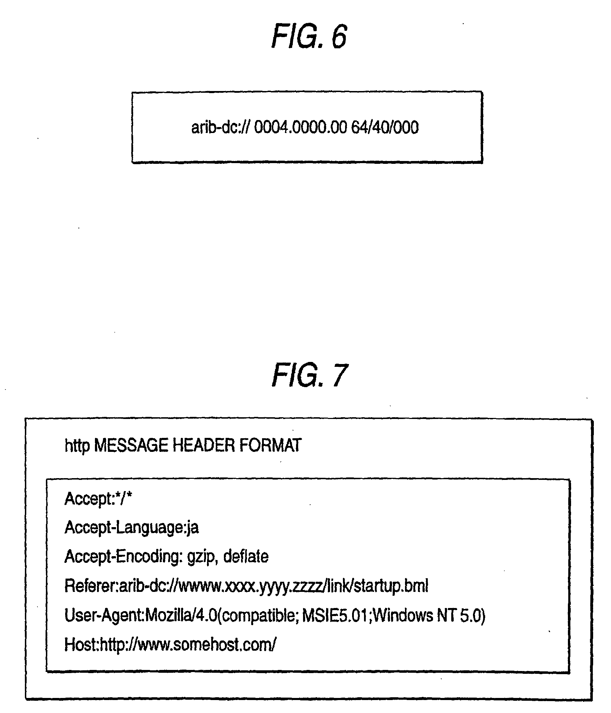

Fig. 6 represents an example of this URI. The beginning "0004" in Fig. 6 is a network ID, representing a satellite 6 number. The next "0000" is a transport stream ID, representing a transmission-line identification number.

The next "0064" is a service ID, representing a channel number. The next "40" is a component tag, representing a stream number in the channel. The last "000" represents a module ID, representing an identification number in the data broadcast contents.

In case a reference source URI is extracted at step S15 as in the above, the CPU 32 at step S16 inserts the URI extracted in the process of step S15 into an http message header and requests the contents server 9 to send the designated network contents.

Fig. 7 represents a format of http message header. This format is configured by the repetition of a field and its field value. Of the format, the field of "Referer" is the field representative of a reference source URI. In the Fig. 7 example, "arib-dc://wwww.xxxx.yyyy.zzzz/link/startup.bml" is described as a reference source URI.

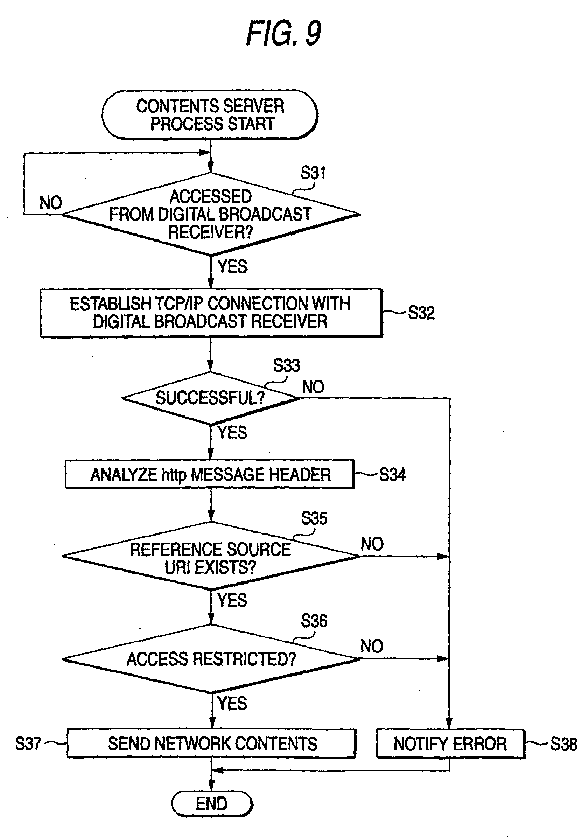

Based on this request by the digital broadcast receiver 4, network contents or an error is notified from the contents server 9 as hereinafter described with reference to the flowchart of Fig. 9 (steps S37, 38 in Fig. 9).

Consequently, the CPU 32 at step S17 determines whether or not received network contents. In the case of not received, the process proceeds to step S19, to execute an error process. Namely, in the case that an error is notified from the contents server 9 (in the case that the process of step S38 in Fig. 9 is executed, in the contents server 9), the process proceeds to step S19, to execute an error process. Namely, in this case, no reference is made to the network contents but, as shown in Fig. 8B, the broadcast contents BC only is displayed on the monitor 5.

Contrary to this, at the step S17, in the case of a determination that network contents have been received, the CPU 32 proceeds to step S18, to output the received network contents to the monitor 5 simultaneously with the broadcast contents, making a display thereon. Namely, in this case, as shown in Fig. 8A, the broadcast contents BC and the network contents NC being made reference to by that broadcast contents BC are displayed simultaneously on the same screen.

Now, referring to the flowchart of Fig. 9, explained is the process of the contents server 9 to be executed correspondingly to the above process of the digital broadcast receiver 4 as in the above.

At first, at step S31, the CPU 61 of the contents server 9 waits until accessed from the digital broadcast receiver 4. When it is determined that there is received an access from the digital broadcast receiver 4 through the communicating section 69, the process proceeds to step S32 where the CPU 61 executes a process to establish a TCP/IP connection with the digital broadcast receiver 4. This process is a process corresponding to the process of the digital broadcast receiver 4 at the step S13 of Fig. 5.

At step S33, the CPU 61 determines whether establishing a connection has been successful or not. In the case of not successful, the process proceeds to step S38, to notify the digital broadcast receiver 4 of an error.

At the step S33, in the case of a determination that establishing a connection has been successful, the process proceeds to step S34 where the CPU 61 analyzes the message header of http received from the digital broadcast receiver 4. In the case that the broadcast contents is making reference to network contents, the http message header describes a reference source URI making reference to network contents, as shown in Fig. 7. The CPU 61 at step S35 determines whether or not the http message header describes this URI. In the case of no description, the process proceeds to step S38, to execute an error notifying process.

At step S35, in the case of a determination that a reference source URI is described in the http message header, the process proceeds to step S36. The CPU 61 determines, by referring to the database 101, whether or not there is an addition of an access restriction to the network contents requested for sending. In the case that there is added an access restriction, the process proceeds to step S38 where the CPU 61 notifies an error to the digital broadcast receiver 4. In the case access is not restricted, the process proceeds to step S37. The CPU 61 reads the network contents requested from the digital broadcast receiver 4 out of the contents database 102, and delivers it to the digital broadcast receiver 4 from the communicating section 69 through the Internet 8.

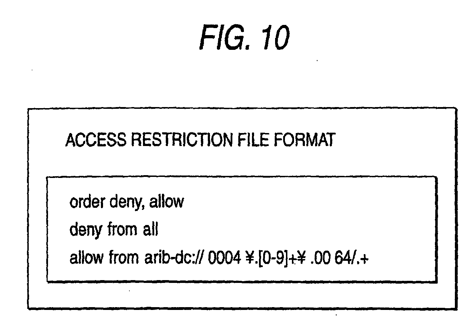

Fig. 10 represents an example of an access restricting file format defined in the access restriction information database 103. The first line describes that access is denied to the subsequent lines, representing a description allowing for access to the next line. "deny from all" represent that, principally, reference from every broadcast contents is to be refused. The next line allows only the broadcast contents having a network_id of 0x4 and a service_id of 0x64 to make reference to network contents.

The manager for the contents server 9 can prevent the network contents from being made reference to by broadcast contents without permission, by defining various access restricting information herein on the basis of a contract with the broadcast station 1-1, 1-2. For example, it is possible to refuse a reference from a Web browser of personal computer or to allow a reference for only the request from a particular service while allowing a reference from broadcast contents.

The foregoing one series of processes, although can be executed on hardware, can be carried out over software. In the case of executing the series of processes on software, the program configuring that software is installed from the network or recording medium onto a computer incorporated in exclusive hardware or, for example, general-purpose personal computer capable of executing various functions by being installed with various programs.

The recording medium, as shown in Fig. 3, is configured not only by a package media constituted by a program-recorded magnetic disk 81 (including floppy disk), optical disk 82 (including CD-ROM (Compact Disk-Read Only Memory) , DVD (Digital Versatile Disk)), magneto optical disk 83 (including MD (Mini-Disk)) or semiconductor memory 84 distributed for supplying a program to the user separately from the apparatus main body, but also by a ROM 62 recording a program or a hard disk included in the storage section 68 provided in a state previously incorporated in the apparatus main body to the user.

Incidentally, in the present specification, the step describing a program recorded to the recording medium includes, of course a process to be chronologically made along a described order, also a process to be executed in parallel or discretely even if not necessarily to be processed chronologically.

Meanwhile, in the present specification, system represents the apparatus overall constituted by a plurality of apparatuses.

### INDUSTRIAL APPLICABILITY

As in the above, according to the information providing system and information providing method of the present invention, the information processing apparatus extracts the identifying information contained in the first information received from the first information providing apparatus and requests the second information providing apparatus to provide second information by attaching the extracted identifying information. The second information providing apparatus determines whether to provide the second information to the information processing apparatus or not, on the basis of the identifying information. Accordingly, it is possible to realize a system capable of preventing the second information from being unduly made reference to by the first information or so.

According to the information processing apparatus and method, recording medium, and program of the present invention, identifying information is extracted from the first information received from the first information providing apparatus. By attaching the extracted identifying information, the second information providing apparatus is requested to provide second information. Accordingly, it is possible to prevent second information to be unduly used from being inadvertently provided to a user or so.

According to the information providing apparatus and method, recording medium, and program of the present invention, based on received identifying information, it is determined whether to provide second information to the information processing apparatus or not. Based on the determination result, the second information is provided to the information processing apparatus. Accordingly, it is possible to easily and positively prevent the second information being unduly made reference to by the first information from being provided to the information processing apparatus.

## Claims

1. An information providing system comprising
an information processing apparatus for receiving first information and second information to be made reference to by said first information,
a first information providing apparatus for providing said first information, and
a second information providing apparatus for providing said second information,
said information providing system **characterized by**:
said first information providing apparatus providing said first information for making reference to said second information to said information processing apparatus;
said information processing apparatus
receiving said first information from said first information providing apparatus,
extracting identifying information for identifying said first information from said received first information, and
requesting to provide said second information being made reference to by said received first information by attaching the identifying information to said second information providing apparatus;
said second information providing apparatus
determining whether or not to provide said second information to the information processing apparatus on the basis of the identifying information received from said information processing apparatus, and
providing said second information to said information processing apparatus on the basis of a determination result thereof.

2. The information providing system according to claim 1, wherein
said first information providing apparatus provides broadcast contents as said first information by broadcast,
said second information providing apparatus provides network contents as said second information through the Internet.

3. The information providing system according to claim 2, wherein
said identifying information is a URI of said broadcast contents.

4. The information providing system according to claim 3, wherein
said information processing apparatus inserts said URI of said broadcast contents into an http message header, and requesting to provide said second information to said second information providing apparatus.

5. An information providing method of an information providing system comprising
an information processing apparatus for receiving first information and second information to be made reference to by said first information,
a first information providing apparatus for providing said first information, and
a second information providing apparatus for providing said second information,
said information providing method **characterized by**:
said first information providing apparatus providing said first information for making reference to said second information to said information processing apparatus;
said information processing apparatus
receiving said first information from said first information providing apparatus,
extracting identifying information for identifying said first information from said received first information, and
requesting to provide said second information being made reference to by said received first information by attaching said identifying information to said second information providing apparatus;
said second information providing apparatus
determining whether or not to provide said second informationto said informationprocessing apparatus on the basis of said identifying information received from said information processing apparatus, and
providing said second information to said information processing apparatus on the basis of a determination result thereof.

6. An information processing apparatus for receiving first information provided by a first information providing apparatus and second information providedby a second information providing apparatus to be made reference to by said first information, said information processing apparatus **characterized by** comprising:
first receiving means for receiving said first information provided by said first information providing apparatus;
extracting means for extracting identifying information for identifying said first information from said first information received by said first receiving means;
request means for requesting to provide said second information being made reference to by said first information received by said first receiving means, by attaching said identifying information extracted by said extracting means to said second information providing apparatus; and
second receiving means for receiving said second information provided by said second information providing apparatus, on the basis of a request by said request means.

7. The information processing apparatus according to claim 6, wherein
said first receiving means receives broadcast contents provided by a broadcast of said first information providing apparatus as said first information,
said second receiving means receives network contents provided by said second information providing apparatus through the Internet as the second information.

8. The information processing apparatus according to claim 7, wherein
said extracting means extracts a URI of said broadcast contents as the identifying information.

9. The information processing apparatus according to claim 8, wherein
said request means inserts said URI of said broadcast contents into an http message header, to request for providing said second information.

10. The information processing apparatus according to claim 6, further comprising
display means for displaying said second information received by said second receiving means simultaneously with said first information received by said first receiving means.

11. The information processing apparatus according to claim 7, further comprising
display means for displaying said broadcast contents received by said first receiving means and said network contents being made reference to by said broadcast contents, and received by said second receiving means, simultaneously on a same screen.

12. A information processing method for an information processing apparatus for receiving first information provided by a first information providing apparatus and second information provided by a second information providing apparatus to be made reference to by said first information, said information processing method **characterized by** comprising:
a first receiving step of receiving said first information provided by said first information providing apparatus;
an extracting step of extracting identifying information for identifying said first information from said first information received by a process of said first receiving step;
a request step of requesting said second information providing apparatus to provide said second information being made reference to by said first information received in said first receiving step, by attaching said identifying information extracted by a process of said extracting step; and
a second receiving step of receiving said second information provided by said second information providing apparatus, on the basis of a request by a process of said request step.

13. A program for an information processing apparatus for receiving first information provided by a first information providing apparatus and second information provided by a second information providing apparatus to be made reference to by said first information, a recording medium recording a program to be read by a computer **characterized by** comprising:
a first receiving step of receiving said first information provided by said first information providing apparatus;
an extracting step of extracting identifying information for identifying said first information from said first information received by a process of said first receiving step;
a request step of requesting said second information providing apparatus to provide said second information being made reference to by said first information received in said first receiving step, by attaching said identifying information extracted by a process of said extracting step; and
a second receiving step of receiving said second information provided by said second information providing apparatus, on the basis of a request by a process of said request step.

14. A program for making a computer for controlling an information processing apparatus for receiving first information provided by a first information providing apparatus and second information providedby a second information providing apparatus to be made reference to by said first information, to execute:
a first receiving step of receiving the first information provided by said first information providing apparatus;
an extracting step of extracting identifying information for identifying said first information from said first information received by a process of said first receiving step;
a request step of requesting said second information providing apparatus to provide said second information being made reference to by said first information received in said first receiving step, by attaching said identifying information extracted by a process of said extracting step; and
a second receiving step of receiving said second information provided by said second information providing apparatus, on the basis of a request by a process of said request step.

15. An information providing apparatus for providing second information to be made reference to by first information provided to an information processing apparatus by another information providing apparatus to said information processing apparatus, said information providing apparatus **characterized by** comprising:
receiving means for receiving a request for providing said second information from said information processing apparatus;
extracting means for extracting identifying information for identifying said first information from a request received by said receiving means;
determining means for determining whether to provide said second information to said information processing apparatus or not, on the basis of said identifying information extracted by said extracting means; and
providing means for providing said second information to said information processing apparatus, on the basis of a determination result by said determining means.

16. The information providing apparatus according to claim 15, wherein
said providing means provides network contents as said second information to be made reference to by broadcast contents as the first information provided by broadcast of said other information providing apparatus, through the Internet.

17. The information processing apparatus according to claim 16, wherein
said extracting means extracts a URI of said broadcast contents as the identifying information.

18. The information processing apparatus according to claim 17, wherein
said extracting means extracts a URI of said broadcast contents from an http message header.

19. The information providing apparatus according to claim 15, further comprising
storing means for storing access restricting information for restricting an access of the second information,
said determining means determining whether to provide said second information to said information processing apparatus, further on the basis of said access restricting information stored in said storing means.

20. An information providing method for an information providing apparatus for providing second information to be made reference to by first information provided to an information processing apparatus by another information providing apparatus to said information processing apparatus, **characterized by** comprising:
a receiving step of receiving a request for providing said second information from said information processing apparatus;
an extracting step of extracting identifying information for identifying said first information from a request received by a process of said receiving step;
a determining step of determining whether to provide said second information to said information processing apparatus or not, on the basis of said identifying information extracted by a process of said extraction step; and
a providing step of providing said second information to said information processing apparatus, on the basis of a determination result by a process of determining step.

21. A program for an information providing apparatus for providing second information to be made reference to by first information provided to an information processing apparatus by another information providing apparatus to said information processing apparatus, a recording medium recording a program to be read by a computer **characterized by** comprising:
a receiving step of receiving a request for providing said second information from said information processing apparatus;
an extracting step of extracting identifying information for identifying said first information from a request received by a process of said receiving step;
a determining step of determining whether to provide said second information to said information processing apparatus or not, on the basis of said identifying information extracted by a process of said extraction step; and
a providing step of providing said second information to said information processing apparatus, on the basis of a determination result by a process of said determining step.

22. A program for making a computer for controlling an information providing apparatus for providing second information to be made reference to by first information provided to an information processing apparatus by another information providing apparatus to said information processing apparatus, to execute:
a receiving step of receiving a request for providing said second information from said information processing apparatus;
an extracting step of extracting identifying information for identifying said first information from a request received by a process of said receiving step;
a determining step of determining whether to provide said second information to said information processing apparatus or not, on the basis of said identifying information extracted by a process of said extraction step; and
a providing step of providing said second information to said information processing apparatus, on the basis of a determination result by a process of said determining step.
